# EUROPEAN PATENT APPLICATION

(11) **EP 4 538 729 A1**
(43) Date of publication of application: **16.04.2025**
(21) Application number: 24204175.4
(22) Date of filing: 02.10.2024
(51) Int. Cl.: G01S 1/08, G01S 1/20, G01S 1/68, G01S 5/14, G01S 7/00, G01S 7/481, G01S 17/42, G01S 17/86, G01S 17/931, G05D 1/242, G05D 1/244, G05D 1/648, G05D 101/00, G05D 105/15, G05D 107/20, G05D 109/10, G05D 111/10

(54) **TRAVEL CONTROL DEVICE**

(30) Priority: 10.10.2023 JP 2023174885
(71) Applicant: Yamabiko Corporation, Ohme-shi, Tokyo 198-8760 (JP)
(72) Inventor: KANEKO, Kazuhiro, Ohme-shi, Tokyo, 1988760 (JP); NAKANO, Kenji, Ohme-shi, Tokyo, 1988760 (JP); ISHIHIRA, Daisuke, Ohme-shi, Tokyo, 1988760 (JP); UENO, Takahiro, Ohme-shi, Tokyo, 1988760 (JP)
(74) Representative: Winter, Brandl - Partnerschaft mbB

(57) **Abstract**

According to an aspect of the present invention, a travel control device is provided. The travel control device comprises a housing that is mounted on a vehicle, a sensor that is mounted in the housing and emits an electromagnetic wave to detect an obstacle; and a circuit for controlling traveling of the vehicle based on a detection result of the sensor. The sensor is positioned vertically above a region that may be the center of gravity of the vehicle.

## Description

### BACKGROUND

### TECHNICAL FIELD

The present invention relates to a travel control device.

### RELATED ART

JP 2022-179577 A discloses a control device used to remotely monitor a plurality of autonomous vehicles configured to be switchable between an autonomous travel mode and a remote control mode.

For autonomous traveling, the vehicle shall comprise a sensor such as a LiDAR that detects an obstacle, however, in a case where such a sensor is retrofitted to the vehicle, the vibration of the vehicle is likely to cause the sensor to shake significantly.

In view of the above circumstances, the present invention aims to provide a travel control device that can suppress shaking of a sensor that is retrofitted to a vehicle.

According to an aspect of the present invention, a travel control device is provided. The travel control device comprises a housing that is mounted on a vehicle, a sensor that is mounted in the housing and emits an electromagnetic wave to detect an obstacle, and a circuit for controlling traveling of the vehicle based on a detection result of the sensor. The sensor is positioned vertically above a region that may be the center of gravity of the vehicle.

According to such an aspect, it is possible to suppress the shaking of the sensor that is retrofitted to the vehicle.

### BRIEF DESCRIPTION OF DRAWINGS

FIG. 1 shows an example of the overall configuration of a vehicle system 1.
FIG. 2 shows an example of a configuration of a vehicle 10 and a remote controller 20.
FIG. 3 is a perspective view of the vehicle system 1.
FIG. 4 is a front view of the vehicle system 1.
FIG. 5 is a side view of the vehicle system 1.
FIG. 6 is a rear view of the vehicle system 1.
FIG. 7 is a plan view of the vehicle system 1.
FIG. 8 shows a mounting position of a LiDAR 42.
FIG. 9 shows an example of a LiDAR 42 mounted on a housing 46.
FIG. 10 shows a method of mounting the LiDAR 42 in the housing 46.
FIG. 11 shows an example of an area where markers are arranged.
FIG. 12 shows an example of the LiDAR 42 mounted on a housing 46a.
FIG. 13 shows an example of the LiDAR 42 mounted on a housing 46b.

### DETAILED DESCRIPTION

Hereinafter, an embodiment of the present invention will be described with reference to the drawings. Various features described in the embodiment below can be combined with each other.

### < Embodiment

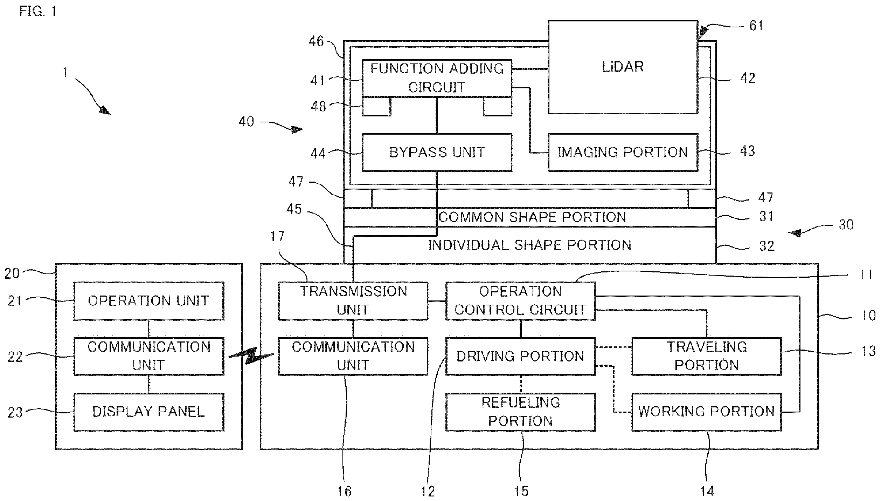

FIG. 1 shows an example of the overall configuration of a vehicle system 1. The vehicle system 1 is a system for causing a vehicle to travel and perform a predetermined work. The predetermined work is, for example, a mowing work in a predetermined area such as a field. The vehicle system 1 comprises a vehicle 10, a remote controller 20, a mounting member 30, and a function adding device 40. The vehicle 10 and the remote controller 20 in the vehicle system 1 are existing products and are configured as the vehicle system 1 by mounting the mounting member 30 and the function adding device 40 afterward. Hereinafter, a description will be given of the existing products first.

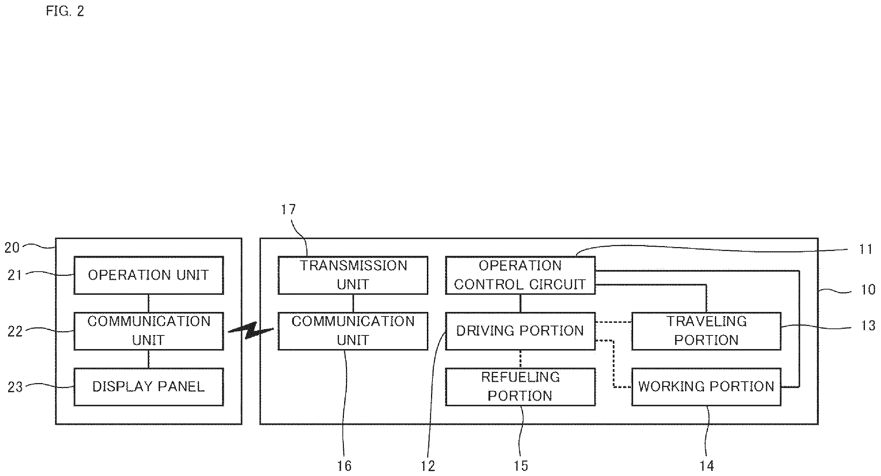

FIG. 2 shows an example of a configuration of the vehicle 10 and the remote controller 20. The vehicle 10 has a travel function and a work function, and it performs a predetermined work while traveling. The remote controller 20 is a controller that has a wireless communication function and remotely controls the vehicle 10. The vehicle 10 comprises an operation control circuit 11, a driving portion 12, a traveling portion 13, a working portion 14, a refueling portion 15, a communication unit 16, and a transmission unit 17. The remote controller 20 comprises an operation unit 21, a communication unit 22, and a display panel 23.

The operation control circuit 11 is a circuit that controls operations of each portion of the vehicle 10. The circuit is an electronic component in which an electric component is placed on a printed circuit board. The circuit may include both electronic and electrical circuits. The driving portion 12 is a portion that generates driving force. In the vehicle 10, the driving portion 12 allows an engine that rotates by burning fuel to generate electric power, charges a battery by using the generated electric power, and generates driving force by rotating an electric motor using the charged electric power. The traveling portion 13 is mechanically connected to the driving portion 12 via gears, etc., and is a portion that is supplied with driving power from the driving portion 12 to drive the vehicle 10. The traveling portion 13 is a caterpillar track, such as so-called Caterpillar (registered trademark) in the vehicle 10.

The working portion 14 is mechanically connected to the driving portion 12 via gears, etc., and is a portion that performs a predetermined work by being supplied with driving power from the driving portion 12. The working portion 14 is a cutter that cuts grass by rotating a cutting blade in the vehicle 10. The refueling portion 15 stores fuel and supplies the stored fuel to the driving portion 12. The communication unit 16 has a wireless communication function and performs wireless communication with the remote controller 20. The communication unit 16 receives an operation signal (details will be described below) transmitted from the remote controller 20 and supplies the operation signal to the transmission unit 17.

The transmission unit 17 is a path for transmitting electrical signals and transmits the supplied operation signal to the operation control circuit 11. The operation control circuit 11 controls the operation of each portion (the driving portion 12, the traveling portion 13, and the working portion 14) based on the transmitted operation signal. At the same time, the operation control circuit 11 generates status information indicating an operation status of each portion, converts the generated status information into a signal, and transmits the signal to the remote controller 20 via the transmission unit 17 and the communication unit 16. The status information is information indicating, for example, a traveling speed, a traveling direction, and whether the working portion 14 is in operation or not.

The operation unit 21 has an operating lever, receives an operation of the vehicle 10 by the operator, and generates an operation signal indicating the received operation details. The operation of the vehicle 10 includes traveling forward and backward, turning left and right, turning on/off of the working portion 14, and the like. The communication unit 22 transmits an operation signal generated by the operation unit 21 wirelessly to the vehicle 10. The communication unit 22 receives the status information transmitted from the vehicle 10. The display panel 23 displays the received status information of the vehicle 10 (e.g., traveling, cutter in operation, or the like).

The explanation will be given with referring back to FIG. 1. The function adding device 40 can be mounted on various vehicles, not limited to the vehicle 10, and a mounting member that matches the shape of the vehicle is used. The mounting member 30 is a mounting member adapted to the shape of the vehicle 10. The mounting member 30 comprises a common shape portion 31 and an individual shape portion 32. The common shape portion 31 is a portion to which the function adding device 40 is fixed and has a common shape regardless of the vehicle to which the mounting member 30 is mounted. The individual shape portion 32 is a portion fixed to the vehicle and has a shape adapted to the individual vehicle.

The function adding device 40 is a device that adds functions to the vehicle 10. The function adding device 40 functions as a travel control device that adds an autonomous travel function to the vehicle 10 in the example of FIG. 1. The autonomous travel function is a function that allows the vehicle 10 to travel autonomously without the operator's operation. The function adding device 40 comprises a function adding circuit 41, a LiDAR 42, an imaging portion 43, a bypass unit 44, a cable 45, a housing 46, first vibration-proof members 47, and a second vibration-proof member 48.

The function adding circuit 41 is a circuit that realizes functions to be added to the vehicle 10. The circuit is an electronic component in which an electric component is placed on a printed circuit board as well as the operation control circuit 11, and it may include both electronic and electrical circuits. The function adding circuit 41 enables various functions to be added. The following describes a case in which an autonomous travel function is added to enable the vehicle 10 to travel autonomously without the operation of the remote controller 20.

A LiDAR 42 (Light Detection And Ranging) is a sensor that emits laser light and measures the distance to an object and its shape based on information from the reflected light. The LiDAR 42 is a 2D LiDAR (two-dimensional LiDAR) whose optical axis directions are on the same plane and emits laser light in 360-degree directions including front, back, left, and right. The imaging portion 43 is a digital camera that has a lens and an image sensor, etc. and captures images represented by light reaching the image sensor. The function adding circuit 41 controls the autonomous travel of the vehicle 10 based on the measurement results by the LiDAR 42 and the images captured by the imaging portion 43.

The bypass unit 44 is electrically connected to the transmission unit 17 of the vehicle 10 via a cable 45, and it is a circuit that diverts the signal transmitted by the transmission unit 17 so that the signal passes through the function adding circuit 41. The bypass unit 44 allows not only the operation signal supplied to the operation control circuit 11 but also the signalized status information generated by the operation control circuit 11 to pass through the function adding circuit 41.

The function adding circuit 41 returns the operation signal directly to the transmission unit 17 and supplies the signal to the operation control circuit 11, and the function adding circuit 41 makes it possible to switch between a manual mode in which the vehicle 10 is manually operated and an automatic mode in which the vehicle 10 is automatically controlled by supplying a control signal that controls the operation of the vehicle 10 instead of the operation signal to the operation control circuit 11 via the transmission unit 17.

The function adding circuit 41 converts an image for mode switching into a signal and transmits the signal to the remote controller 20 via the transmission unit 17 and the communication unit 16. The display panel 23 of the remote controller 20 displays an image for mode switching, allowing the operator to switch between the manual mode and the automatic mode. Mode switching is not limited to the operation of the remote controller 20, but it may be performed, for example, by an operation of a physical switch (toggle switch, etc.) provided in the function adding device 40.

The housing 46 is a rectangular box-shaped member formed of a water-impermeable material such as metal or plastic, and it has a ceiling portion, four lateral face portions, and a bottom surface portion. The housing 46 stores the function adding circuit 41, the LiDAR 42, the imaging portion 43, and the bypass unit 44. The housing 46 has an insertion hole 61 on the ceiling portion. The LiDAR 42 is fixed by being inserted into the insertion hole 61 so that a part of the LiDAR 42 is exposed to the external space, and the part exposed to the external space emits laser light.

The housing 46 is fixed to the common shape portion 31 of the mounting member 30 by the first vibration-proof members 47. Each of the first vibration-proof members 47 is a vibration-proof member having the performance of damping vibrations, such as a spring or rubber. Each of the first vibration-proof members 47 damps vibrations in any direction, including a right/left direction, a front/rear direction, and a vertical direction. The function adding circuit 41 is fixed to the housing 46 by the second vibration-proof member 48. The second vibration-proof member 48 is also a vibration-proof member having the performance of damping vibrations, such as a spring or rubber and damps vibrations in any direction, including a right/left direction, a front/rear direction, and a vertical direction.

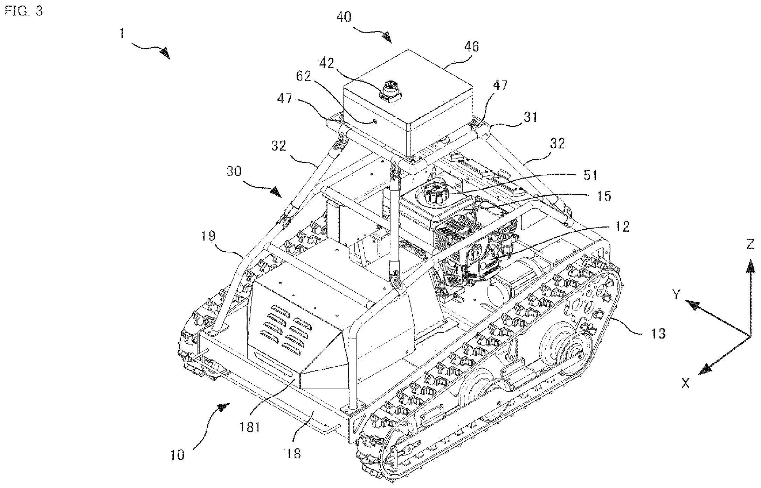

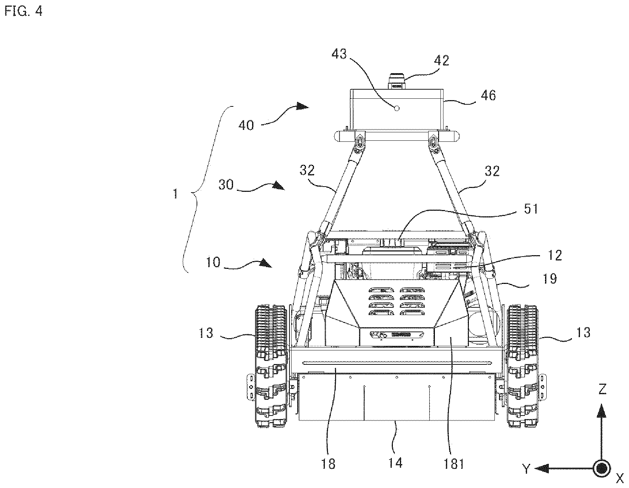

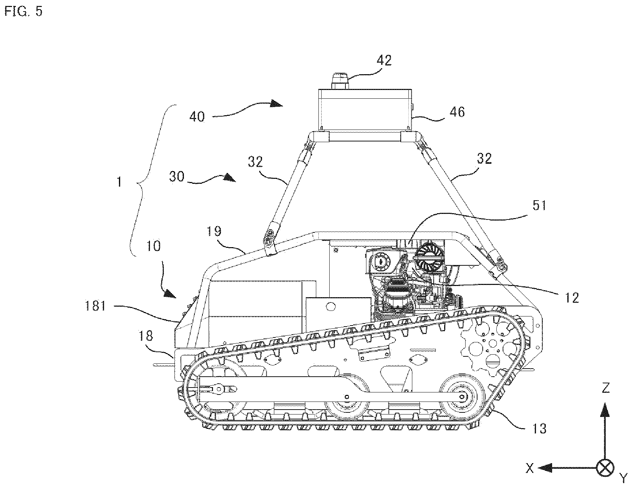

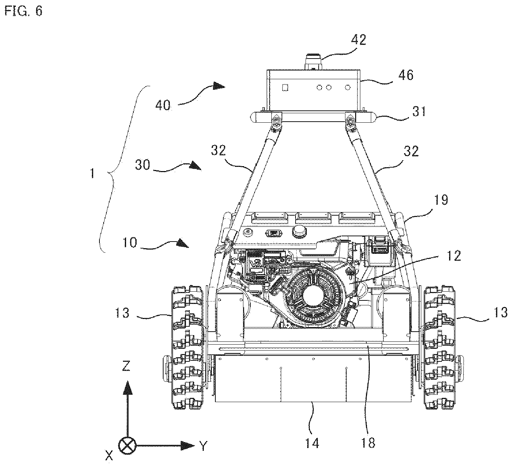

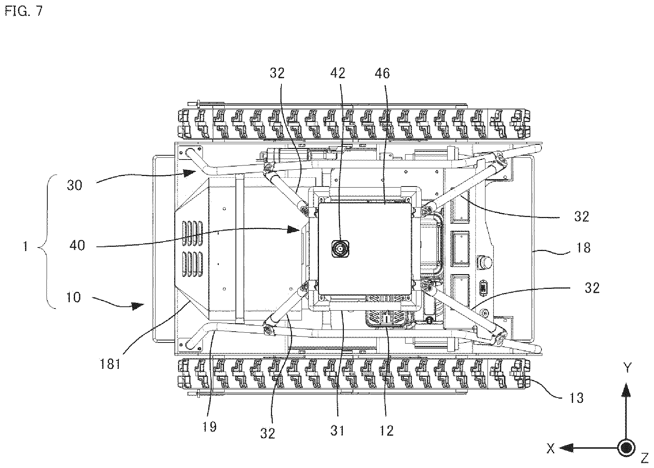

Then, the appearance of the vehicle system 1 is described with reference to FIG. 3 through FIG. 7. FIG. 3 is a perspective view of the vehicle system 1. FIG. 4 is a front view of the vehicle system 1. FIG. 5 is a side view of the vehicle system 1. FIG. 6 is a rear view of the vehicle system 1. FIG. 7 is a plan view of the vehicle system 1. In FIG.3 to FIG.7, the body of the vehicle 10 is not shown in the figures for the sake of clarity of explanation, and the inside of the vehicle 10 are shown visible.

In FIG. 3 through FIG. 7, the three-dimensional coordinate system is shown by arrows indicating an X-axis, a Y-axis, and a Z-axis, respectively. Hereafter, an X-axis direction, a Y-axis direction, and a Z-axis direction are referred to as the front/rear direction, the right/left direction, and the vertical direction, respectively. The vehicle 10 travels with a direction indicated by an arrow on the X-axis as the front direction. The vehicle 10 has a frame 18 and roll bars 19. The driving portion 12, the traveling portion 13, the working portion 14, and the refueling portion 15 and the like are mounted to the outside of the frame 18. The working portion 14 is mounted below the frame 18 so as to cut the grass that has burrowed under the vehicle 10.

Each of the roll bars 19 is fixed to the outside of the frame 18 by screws or the like. Each of the roll bars 19 is a part formed by joining pipes arranged so as to enclose the driving portion 12, refueling portion 15 and the like. The individual shape portion 32 having four bar-shaped members (pipes) is fixed to each of the roll bars 19. One end of each of the four bar-shaped members is fixed to the roll bar 19, and the other end thereof is fixed to the common shape portion 31.

The function adding device 40 is mounted to the common shape portion 31. A cable 45 shown in FIG. 1, which is arranged from the inside to the outside of the housing 46 of the function adding device 40, is tied to one of the bar-shaped members of the individual shape portion 32. At the top of the frame 18, a storage portion 181 is mounted to store the operation control circuit 11 and the transmission unit 17 shown in FIG. 1. The cable 45 is arranged to the inside of the storage portion 181 and is connected to the transmission unit 17 as shown in FIG. 1.

The function adding device 40 is mounted so as to be positioned vertically above a refueling port 51 of the refueling portion 15. The ceiling portion of the housing 46 is provided with the LiDAR 42. The front side portion of the housing 46 is provided with an imaging hole 62 to allow light to enter the imaging portion 43. The function adding device 40 is provided at a position that is higher than and away from the vehicle 10 by the individual shape portion 32, as shown in FIG. 6. The vibration of the vehicle 10 during traveling is transmitted to the common shape portion 31 by the individual shape portion 32.

Here, the function adding device 40 comprises the housing 46 that is mounted on the vehicle 10, the function adding circuit 41 stored in the housing 46 to add a function to the vehicle 10, and the first vibration-proof members 47 provided between the housing 46 and the vehicle 10 to damp vibrations transmitted from the vehicle 10 to the housing 46. With the first vibration-proof members 47, the vibrations that has transmitted to the common shape portion 31 are greatly damped and transmitted to the housing 46. Thus, only damped vibrations are transmitted to the function adding circuit 41 inside the housing 46. According to such an aspect, it is possible to suppress a fault of a circuit to be retrofitted to a vehicle such as the function adding circuit 41 compared with the case where the first vibration-proof members 47 are not provided.

Furthermore, the function adding device 40 comprises a sensor that is mounted in the housing 46. In the example of FIG. 1, the function adding device 40 comprises three sensors: the LiDAR 42, the imaging portion 43, and an IMU (Inertial Measurement Unit) (not shown). The LiDAR 42 is an example of a sensor that emits electromagnetic waves (laser light) to detect an obstacle. The function adding circuit 41 is an example of a circuit for controlling traveling of the vehicle 10 based on a detection result of the sensor. In the function adding device 40, the vibrations from the vehicle 10 are damped by the first vibration-proof members 47, thus also suppressing the vibrations of the LiDAR 42 and the imaging portion 43 compared with the case where the first vibration-proof members 47 are not provided. This makes it possible to suppress degradation in measurement accuracy due to the vibrations of the sensor.

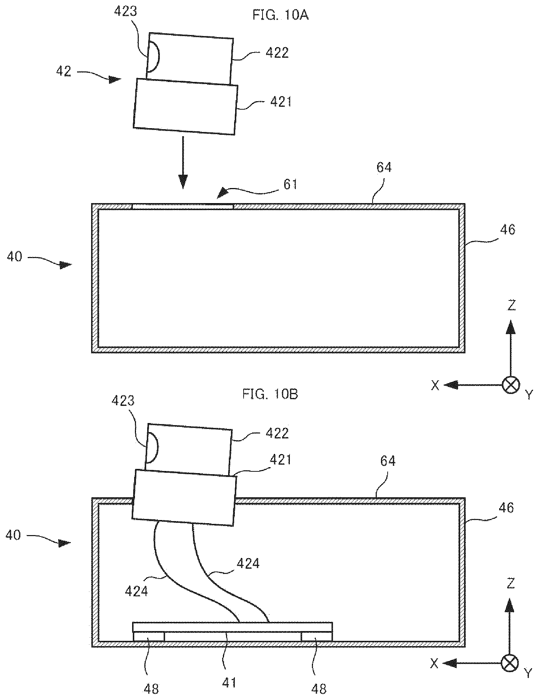

As shown in FIG. 7, in the function adding device 40, the housing 46 is in the shape of a polygon (a square in the example of FIG. 7) when viewed vertically from above. It should be noted that the shape of the housing 46 is not limited to that shown in FIG. 10. For example, the housing 46 may be in the shape of a polygon other than a quadrilateral when viewed vertically from above, or it may be in the shape of a quadrilateral with one side deformed so as to form an arc rather than a straight line. Furthermore, the housing 46 may be circular or oval when viewed vertically from above.

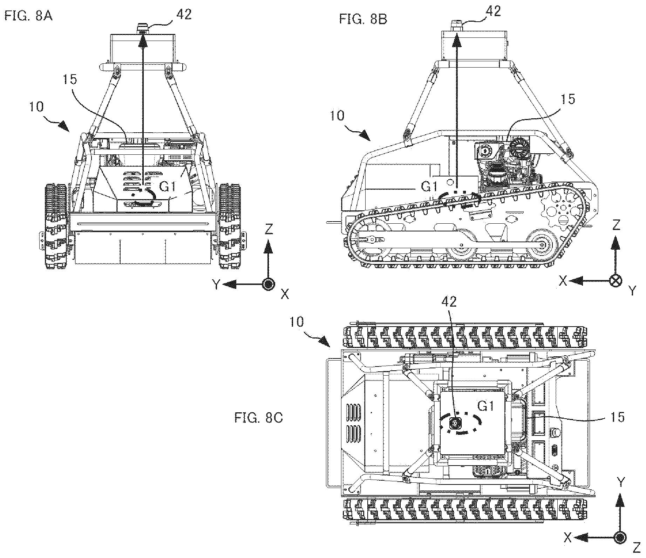

A location where the LiDAR 42 is mounted will be described with reference to FIG. 8.

FIG. 8 shows a mounting position of the LiDAR 42. FIG. 8A shows the vehicle 10 viewed from the front, FIG. 8B shows the vehicle 10 viewed from the left, and FIG. 8C shows the vehicle 10 viewed from above. FIG. 8 shows a region G1 that may be the center of gravity of the vehicle 10.

In the vehicle 10, for example, the center of gravity changes depending on the amount of fuel stored in the oil supply portion 15. In addition, the center of gravity may change depending on the type of mowing blade attached to the working portion 14 in the vehicle 10. The region G1 is a set of possible positions of the center of gravity that changes in such a manner. The center of gravity of the vehicle 10 can be measured by well-known methods such as a pendulum manner, an excitation manner or an experimental modal analysis. Thus, the region G1 can be specified by measuring the position of the center of gravity which is changed by changing the amount of fuel stored in the oil supply portion 15 or by changing the type of mowing blade attached to the working portion 14.

As shown in FIG. 8, the LiDAR42 that is an example of a sensor is positioned vertically above the region G1, which may be the center of gravity of the vehicle 10. The term "vertically above" mentioned here means positioning vertically above in a state that the vehicle system 1 is stationary on the horizontal and flat ground. The LiDAR 42 may be provided vertically above any location in the region G1. The phrase "positioned vertically above the region G1" means that a part of the LiDAR 42 may be positioned vertically above the region G1.

When the vehicle 10 travels, various behaviors such as pitching, rolling and yawing occur depending on the forces applied to the vehicle 10. The yawing of these behaviors is a rotational motion around the Z-axis passing through the center of gravity of the vehicle 10, so that the closer to the Z-axis, the less the position shift due to the rotational motion. In the vehicle system 1, the LiDAR 42 is positioned vertically above the region G1, which may be the center of gravity of the vehicle 10 as described above, and thus, compared with the case where the LiDAR 42 is not positioned vertically above the region G1, the shaking (especially, the shaking when the yawing occurs) of the sensor (LiDAR 42) retrofitted to the vehicle can be suppressed.

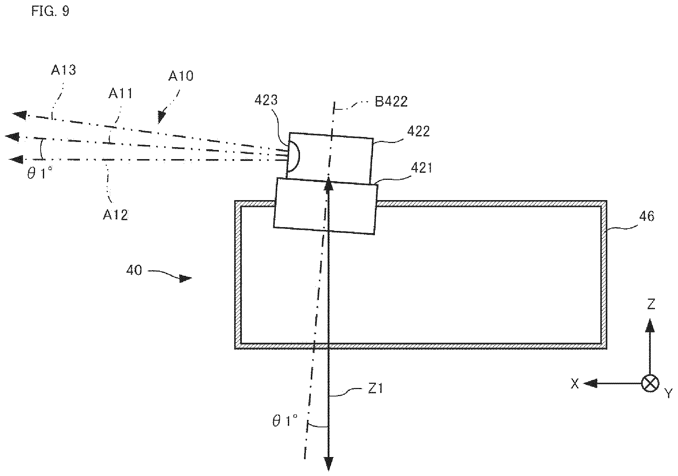

The method of mounting the LiDAR 42 in the housing 46 is described with reference to FIG. 9 and FIG. 10.

FIG. 9 shows an example of the LiDAR 42 mounted on the housing 46. FIG. 9 shows the LiDAR 42 and the housing 46 viewed from the left. The LiDAR 42 comprises a base portion 421, a rotary portion 422, and an irradiation portion 423. The base portion 421 is a main body of the LiDAR 42 and stores a motor that rotates the rotary portion 422 and a control circuit that controls the operation of the rotary portion 422 and the irradiation portion 423.

The rotary portion 422 is a portion having a hollow cylindrical shape and is rotatably supported with respect to the base portion 421. The irradiation portion 423 has a laser oscillator and irradiates laser light A10. While the rotary portion 422 rotates, the irradiation portion 423 irradiates the laser light A10, thereby irradiating the laser light A10 in 360 degrees in front, back, left and right. The laser light A10 propagates while slightly expanding an irradiation range with an optical axis A11 as a center. FIG. 9 shows lower end light A12 traveling at the lower end of the irradiation range of the laser light A10 and upper end light A 13 traveling at the upper end of the irradiation range.

In the example of FIG. 9, the LiDAR 42 is mounted on the housing 46 at an angle so that the lower end light A12 propagates along the horizontal direction. For example, it is assumed that the direction of propagation of the lower end light A12 is at an angle of θ1° with respect to the optical axis A11. In such a case, the LiDAR 42 is provided with a rotation axis B422 of the rotary portion 422 inclined at θ1° with respect to the vertical direction Z1.

In this way, in the function adding device 40, the electromagnetic wave (laser light) emitted by the LiDAR 42, which is an example of a sensor, propagates while expanding the irradiation range with the sensor as a starting point. The LiDAR 42 is provided in a direction where the lower end of the electromagnetic wave (the lower end light A12 shown in FIG. 9), whose irradiation range expands, does not hit the ground in front of the vehicle 10. Since the LiDAR 42 has a measurable effective range, the direction of propagation of the lower end light A12 may be inclined slightly downward from the horizontal direction in the case where the ground does not fall within the effective range.

In the case where a sensor such as the LiDAR 42 is used to measure an obstacle, it is determined that an obstacle exists in a direction where there is originally no obstacle if the ground is measured, and thus an erroneous travel control may be performed. Thus, it is possible to suppress the detection of the ground as an obstacle compared with the case where the sensor is provided without inclination by providing the sensor in an inclined manner as described above, thereby suppressing the occurrence of an erroneous travel control.

FIG. 10 shows a method of mounting the LiDAR 42 in the housing 46. FIG. 10 A shows a cross-section of the housing 46 viewed from the left before the LiDAR 42 is mounted. In the housing 46, as described in FIG. 1, an insertion hole 61 for inserting the LiDAR 42 is formed. The insertion hole 61 is provided on a ceiling portion 64 covering the upper part of the housing 46 and is shaped to allow the base portion 421 of the LiDAR 42 to be inserted at an angle.

As shown in FIG. 10B, the base portion 421 is inserted into the insertion hole 61 and fixed. A gap-replenishing member for preventing a gap from occurring is sandwiched between the base portion 421 inserted into the insertion hole 61 and the housing 46. The gap-replenishing member is preferably a member that has elasticity and a waterproofing property, such as rubber used for a gasket. The wiring 424 is connected to the base portion 421 inside the housing 46. The wiring 424 is connected to the function adding circuit 41 and transmits a signal indicating a measurement result of the LiDAR 42 to the function adding circuit 41. The function adding circuit 41 is fixed to the housing 46 by a second vibration-proof member 48.

In this way, in the function adding device 40, the housing 46 has a box-shape including the ceiling portion 64 at a vertically upper side, which is a plate-like member, and the ceiling portion 64 is provided with the insertion hole 61 that is in the shape of the LiDAR 42 that is an example of a sensor. Then, the LiDAR 42 is inserted into the insertion hole 61 and fixed, and it is connected to the function adding circuit 41 via the wiring 424 inside the housing 46. According to such an aspect, the sensor and the wiring are connected inside the housing and the wiring is not exposed outside the housing, so that while a part of the sensor is exposed outside the housing to allow a detection by electromagnetic waves, the wiring can be made less likely to get wet compared with the case where the entire sensor is exposed to the outside of the housing.

In addition, the LiDAR 42 that is an example of a sensor has a portion that emits an electromagnetic wave (laser light) in a direction of a predetermined range along the horizontal direction (hereinafter referred to as an "emitting portion"). The emitting portion is, for example, the rotary portion 422 and the irradiation portion 423. The "predetermined range" is, for example, the entire 360-degree range. The predetermined range may not be all 360 degrees, but may be, for example, the entire range except for a certain range in the rearward direction where there is little need to detect obstacles.

The emitting portion is provided at a position higher than the upper end that is located at the highest position in the vehicle 10 and the housing 46. In the vehicle system 1, the upper end that is located at the highest position in the vehicle 10 and the housing 46 is the ceiling portion 64 shown in FIG. 10A. As shown in FIG. 10B, the LiDAR 42 is provided with the rotary portion 422 and the irradiation portion 423 at a position higher than the ceiling portion 64. According to such an aspect, the detection by the sensor can be unobstructed by the vehicle and the housing.

The LiDAR 42 that is an example of a sensor has a function of detecting a position of a predetermined marker. The marker is arranged in the vicinity of the boundary of the area in which the vehicle 10 travels as a mark indicating the boundary of the area in which the vehicle 10 travels. The marker, such as a plate or a stick having a specific shape, is preferably arranged at a position higher than the height of the weeds to be mowed by the vehicle 10. The LiDAR 42 is desirably provided at a position lower than the upper end of the marker. The LiDAR 42 is provided in this way, thus making it possible to more securely detect the marker compared with the case where the LiDAR 42 is provided at a position higher than the upper end of the marker.

The vicinity of the boundary means a location within a predetermined distance from the boundary. The predetermined distance is a distance for preventing the vehicle 10 from coming into contact with a marker 70 when the vehicle 10 travels around the edge or corner of the work area A1, and is set to, for example, about several tens of centimeters to several meters. Thus, the marker 70 is arranged as a guide for the boundary of the work area A1.

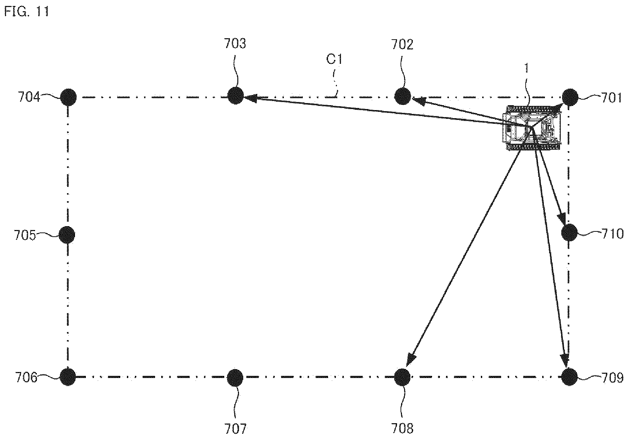

FIG. 11 shows an example of an area where markers are arranged. The example in FIG. 11 shows a rectangular work area C1 in which ten markers 70 from markers 701 to 710 (when these markers are not distinguished, referred to as markers 70) are arranged. The function adding circuit 41 measures the distance and direction to each marker 70 by the LiDAR 42. In the example of FIG. 11, the markers 70 are provided on the boundary of the work area C1 for the sake of clarity of explanation. In the example of FIG. 11, it is assumed that the markers 701, 702, 703, 708, 709 and 710 which are within the detection range of the LiDAR 42 are detected and the markers 704, 705, 706 and 707 which are outside the detection range are not detected.

The function adding circuit 41 may control the vehicle 10 to rotate when detecting the markers 70. For example, depending on how the LiDAR 42 is mounted, the limit distance at which the markers 70 can be detected may vary depending on the orientation. For example, in the case where detection is possible up to the farthest distance in the front direction and the limit distance is set as the maximum detectable distance, the markers 70 can be detected up to the maximum detectable distance in any direction by rotating the vehicle 10.

The function adding circuit 41 controls the vehicle 10 so that the vehicle 10 travels inside an area whose boundary is in the vicinity of the position of the marker detected by the LiDAR 42. The function adding circuit 41 first specifies the area enclosed by the detected markers 701, 702, 703, 708, 709 and 710, and the vehicle 10 travels within the specified area. When the vehicle 10 travels close to the marker 703, which is an end of the specified area, the function adding circuit 41 stops the vehicle 10 once and detects the markers 70 again using the LiDAR 42.

In this case, the markers 704, 705, 706 and 707 also fall within the detection range, and thus the distance and direction are measured by the LiDAR 42. In this manner, the function adding circuit 41 detects all the markers 70 by repeating the process of detecting the markers 70 again after when the vehicle travels to the end of the area whose boundary is the position of the detected marker, and it specifies the work area C1 with all the detected markers 70 as boundaries. According to such an aspect, the vehicle can be made to travel within a predetermined area (e.g., the work area C1) even without a position sensor. In the function adding device 40, the first vibration-proof members 47 also damp the vibrations of the LiDAR 42, and this enables the accuracy of the detection result of the LiDAR 42 to be improved and this enables the accuracy of the autonomous travel to be improved compared with the case where the first vibration-proof members 47 are not provided.

It should be noted that the number of markers 70 is not limited to 10 shown in FIG. 11. For example, four markers 70 may be arranged at the four corners of the work area C1. In such a case, it is preferable that all of the four markers 70 can be detected from anywhere in the work area C1. In the case where some of the markers 70 cannot be detected because the work area C1 is too large, for example, a string-like object (a rope or a belt, etc.) may be attached between the markers 70 to indicate the boundary line of the work area. In such a case, the LiDAR 42 detects the string-like object in addition to the markers 70.

The function adding device 40 comprises the imaging portion 43 (in detail, an image sensor included in the imaging portion 43), which is an example of a second sensor provided in the housing 46. The imaging portion 43 (image sensor) is a sensor that detects images represented by visible lights. When the function adding circuit 41 performs pattern recognition processing or the like on the image captured by the imaging portion 43, it is possible to detect specific objects, such as a person or a car, which are to be obstacles for the vehicle 10. Thus, the imaging portion 43 cooperates with the function adding circuit 41 to perform a function of detecting obstacles.

When the imaging portion 43 detects an obstacle, the function adding circuit 41 controls the vehicle 10 to avoid a collision with the obstacle. For example, when an obstacle is detected, the function adding circuit 41 stops the vehicle 10 to avoid a collision with the obstacle. Furthermore, when an obstacle is detected, the function adding circuit 41 changes the direction to the one where the obstacle does not exist to avoid a collision with the obstacle. According to such an aspect, the vehicle 10 can avoid colliding with an obstacle. In the function adding device 40, since the first vibration-proof members 47 also damp vibrations of the imaging portion 43, this enables the accuracy of the detection results (captured images) of the imaging portion 43 to be improved, and this also enables the accuracy of processing for avoiding a collision to be improved compared with the case where the first vibration-proof members 47 are not provided.

### <Configuration variations>

The method of mounting the LiDAR 42 on the housing 46 is not limited to that shown in FIG. 9.

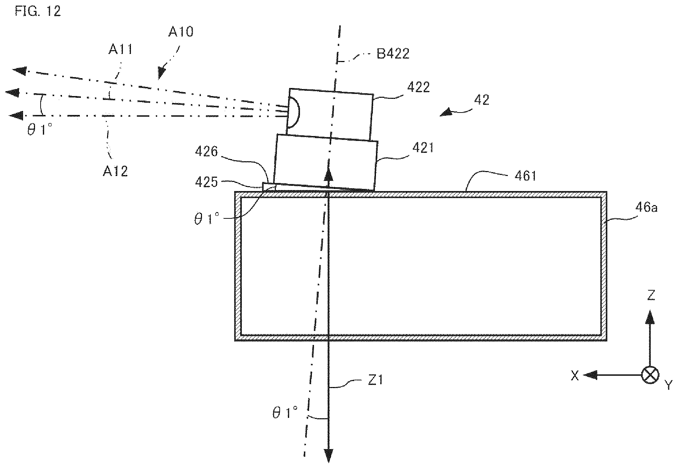

FIG. 12 shows an example of the LiDAR 42 mounted on a housing 46a. FIG. 12 shows the LiDAR 42 and the housing 46a viewed from the left. A top surface 461 of the housing 46a does not have the insertion hole 61 shown in FIG. 10, and a pedestal portion 425 is fixed at the same position as the insertion hole 61.

The pedestal portion 425 has an inclined surface 426 that forms an inclination of θ1° as shown in FIG. 9 with respect to the top surface 461 when the pedestal portion 425 is fixed to the top surface 461. The inclined surface 426 is fixed so that the front thereof becomes higher, and the rear thereof becomes lower. The LiDAR 42 is fixed by bringing a bottom surface of the base portion 421 into intimate contact with the inclined surface 426. By being fixed in this manner, the rotation axis B422 of the rotary portion 422 of the LiDAR 42 is inclined at θ1° with respect to the vertical direction Z1, and the optical axis A11 of the laser light irradiated by the LiDAR 42 is inclined upward at θ1° with respect to the horizontal direction.

As a result, the lower end of the laser light (lower end light A12) propagates along the horizontal direction and does not hit the ground in a state in that the vehicle 10 is kept horizontal. Thus, the LiDAR 42 is provided in such a direction where the lower end light A12 does not hit the ground in the example of FIG. 12 as well as the example of FIG. 9, and it is possible to suppress the detection of the ground as an obstacle. It should be noted that the cable of the LiDAR 42 is arranged inside the housing 46a through a hole (not shown) provided on the top surface 461.

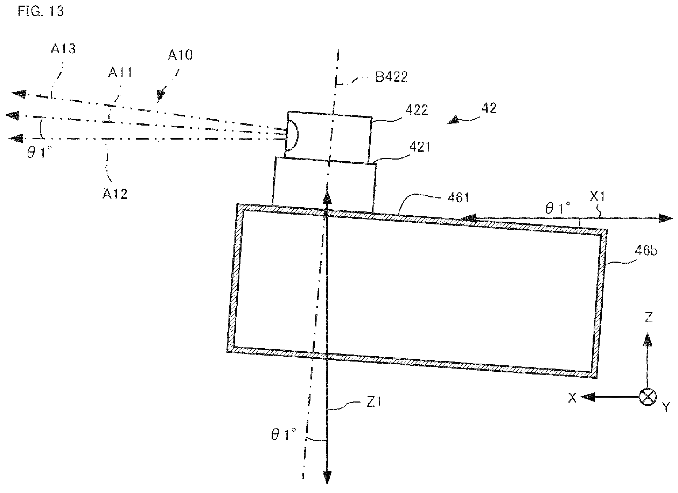

FIG. 13 shows an example of the LiDAR 42 mounted on a housing 46b. FIG. 13 shows the LiDAR 42 and the housing 46b, viewed from the left. A top surface 461 of the housing 46b does not have the insertion hole 61 shown in FIG. 10. The housing 46b is mounted on the vehicle 10 in a direction where the upper surface 461 is inclined at only θ1° with respect to the horizontal direction X1. In more detail, the housing 46b is inclined so that the front of the top surface 461 is higher than the rear thereof.

The inclination of the housing 46b is caused, for example, by making an upper end of a rear-side individual shape portion 32 lower than an upper end of a front-side individual shape portion 32, in the individual shape portion 32 shown in FIG. 5. The housing 46b is mounted in this manner, so that the rotation axis B422 of the rotary portion 422 of the LiDAR 42 is inclined at θ1° with respect to the vertical direction Z1, and the optical axis A11 of the laser light irradiated by the LiDAR 42 is inclined upward at θ1° with respect to the horizontal direction.

As a result, the lower end of the laser light (lower end light A12) propagates along the horizontal direction and does not hit the ground in a state that the vehicle 10 is kept horizontal. Thus, the LiDAR 42 is provided in such a direction where the lower end light A12 does not hit the ground in the example of FIG. 13 as well as the example of FIG. 9, and it is possible to suppress the detection of the ground as an obstacle. The cable of the LiDAR 42 is arranged inside the housing 46a through a hole (not shown) provided on the top surface 461.

A method of specifying the work area C1 is not limited to that shown in FIG. 11. For example, a predetermined beacon may be arranged at the boundary of an area in which the vehicle 10 travels. The beacon is a device that transmits a wireless signal indicating unique identification information, etc. at a certain time interval. The function adding device 40 comprises a sensor having a function of detecting a signal from a predetermined beacon.

The function adding circuit 41 controls the vehicle 10 so that the vehicle 10 travels inside an area (the work area C1) whose boundary is a position of the beacon indicated by the signal detected by the sensor.
The function adding circuit 41, for example, specifies a relative position of the sensor with respect to the beacon based on the signal detected by the sensor, and it causes the vehicle 10 to travel so that the specified relative position of the sensor falls within the area enclosed by the beacons. The relative position of the sensor with respect to the beacon is specified, for example, by three-point positioning that is obtained by calculating the distance to the three beacons based on the detected signal.

The function adding circuit 41 may also specify a direction of the beacon by using a phase difference of the wireless signal received by a plurality of antennas with a senser having a plurality of antennas. In such a case, the function adding circuit 41 can specify the relative position with respect to the beacon using also the specified direction of the beacon. According to such an aspect, even if there is an obstacle between the beacon and the sensor, a wireless signal can be received, and the relative position can be specified. Thus, this makes it possible to be less affected by the obstacles when performing travel control compared with the case where a sensor that utilizes the reflection of electromagnetic waves such as the LiDAR is used.

In the above example, the function adding circuit 41 controls the traveling by specifying the relative position to the marker or the beacon. However, it is not limited thereto, and the function adding circuit 41 may controls the traveling by specifying the absolute position (e.g., latitude and longitude) of the marker or the beacon. In such a case, for example, the marker indicates a code indicating its own absolute position, and the LiDAR 42 or the imaging portion 43 detects the code to specify the absolute position of the marker. When the beacon transmits position information indicating the absolute position of its own device, the absolute position of the beacon is specified based on the position information received by the sensor.

The function adding device 40 comprises a sensor (e.g., GNSS: Global Navigation Satellite System) that has a function of detecting a position of the vehicle 10. Then, the function adding circuit 41 controls the traveling of the vehicle 10 based on the position detected by the sensor. In detail, the function adding circuit 41 specifies the absolute position of each marker or each beacon based on a detection result of a sensor for the marker or the beacon, and it specifies the boundary of a work area enclosed by a plurality of markers or a plurality of beacons.

The function adding circuit 41 controls a direction and speed, etc. in which the vehicle 10 travels so that the position of the vehicle 10 detected by the sensor is inside the work area. According to such an aspect, once the boundary of the work area is specified, the vehicle can then be made to travel based solely on a detection result of the sensor.

The configuration of the vehicle 10 is not limited to that described in FIG. 2. The vehicle 10 may comprise normal wheels instead of an infinite track. The vehicle 10 may be driven by transmitting a rotational force of the engine directly to the traveling portion 13 and the working portion 14, or it may generate a driving force by mounting only an electric motor without an engine. In the latter case, the vehicle 10 comprises a battery instead of the refueling portion 15. The vehicle 10 is not limited to mowing, but may also be a vehicle for spraying medicine, tilling, rice planting, harvesting, or the like. The vehicle 10 is not limited to remote control, but may also be a vehicle that is driven by a person or a vehicle with an autonomous travel function.

The function added by the function adding device 40 is not limited to that (autonomous travel function) described above. The function adding device 40 may, for example, add a function to autonomously control the operation of the working portion 14 as well as the traveling. In addition, the function adding device 40 may add a function to support remote control by displaying an image captured by the imaging portion 43 on the display panel 23 of the remote controller 20, so that the remote control can be performed even if the vehicle 10 is not visible. In short, the function adding device 40 may be one that adds a function that the vehicle 10 does not include.

The LiDAR 42 detects the markers 70 shown in FIG. 11 or the string-like object described above in the embodiment, but it is not limited thereto. The LiDAR 42 may detect obstacles such as people, trees and other vehicles, or may detect work targets such as grass. In the embodiment, the LiDAR 42 is a 2D LiDAR whose optical axis directions are on the same plane, but it may also be a 3D LiDAR (three-dimensional LiDAR) with a wider scanning range.

The imaging portion 43 detects obstacles by cooperating with the function adding circuit 41 in the embodiment, but it is not limited thereto. The imaging portion 43 may detect, for example, a marker 70 or a string-like object as described above. The imaging portion 43 may also detect working targets such as grass. The imaging portion 43 may also detect the type of person (e.g., workers and other persons) by cooperating with the function adding circuit 41. For example, the imaging portion 43 and the function adding circuit 41 perform pattern recognition of a predetermined work uniform and detect a person wearing the work uniform as a worker.

The imaging portion 43 and the function adding circuit 41 may detect the state of the ground (wet condition, dry condition, etc.) based on luminance, hue, or the like indicated by each pixel of the image of the ground. In the case where the imaging portion 43 has a depth camera or a stereo camera, the imaging portion 43 can detect the distance and direction to the object. The function adding circuit 41 controls the operation of the vehicle 10, such as traveling and working, based on the various detection results of the LiDAR 42 and the imaging portion 43 described above.

The housing 46 is not limited to those shown in FIG. 3 and the like. For example, the housing 46 is a rectangular box-shaped member, but it may have a shape such as a triangular prism, a pentagonal prism, a hexagonal prism, or a column. The LiDAR 42 and the imaging portion 43 may be provided at different positions in the housing 46. In short, the housing 46 may be of any shape or material as long as the housing 46 can store the function adding circuit 41, the bypass unit 44 and the like inside, and it can be mounted so that the LiDAR 42, the imaging portion 43 and the like can measure a required object.

### <Appendix>

In addition, the present invention may be provided with each of the following aspects.
(1) A travel control device, comprising: a housing that is mounted on a vehicle; a sensor that is mounted in the housing and emits an electromagnetic wave to detect an obstacle; and a circuit for controlling traveling of the vehicle based on a detection result of the sensor, wherein the sensor is positioned vertically above a region that may be the center of gravity of the vehicle.
   According to such an aspect, it is possible to suppress shaking of the sensor that is retrofitted to the vehicle.
(2) The travel control device according to (1), wherein: the electromagnetic wave propagates while expanding an irradiation range with the sensor as a starting point, and the sensor is provided in a direction where the lower end of the electromagnetic wave whose irradiation range expands does not hit the ground in front of the vehicle.
   According to such an aspect, it is possible to suppress the detection of the ground as an obstacle.
(3) The travel control device according to (1) or (2), wherein: the housing has a box-shape including a plate-like member at a vertically upper side, the plate-like member is provided with a hole that is in a shape of the sensor, and the sensor is inserted into the hole and fixed, and is connected to the circuit via a wiring inside the housing.
   According to such an aspect, the wiring can be made less likely to get wet.
(4) The travel control device according to any one of (1) to (3), wherein: the sensor has a function of detecting a position of a predetermined marker, the marker is arranged in a vicinity of a boundary of an area in which the vehicle travels, the circuit controls the vehicle so that the vehicle travels inside an area whose boundary is in a vicinity of a position of the marker detected by the sensor, and the sensor is provided at a position lower than the upper end of the marker.
   According to such an aspect, it is possible to more securely detect the marker.
(5) The travel control device according to any one of (1) to (4), wherein: the sensor has a portion that emits the electromagnetic wave in a direction of a predetermined range along a horizontal direction, and the portion is provided at a position higher than the upper end that is located at the highest position in the vehicle and the housing.
   According to such an aspect, the detection by the sensor can be unobstructed.
(6) The travel control device according to (1), wherein: the sensor has a function of detecting a signal from a predetermined beacon, the beacon is arranged at a boundary of an area in which the vehicle travels, and the circuit controls the vehicle so that the vehicle travels inside an area whose boundary is a position of the beacon indicated by the signal detected by the sensor.
   According to such an aspect, it is possible to be less affected by the obstacles when performing travel control.
(7) The travel control device according to (1), wherein: the sensor has a function of detecting a position of the vehicle, and the circuit controls traveling of the vehicle based on the position detected by the sensor.

According to such an aspect, once the boundary of the work area is specified, the vehicle can then be made to travel based solely on a detection result of the sensor.

Of course, the present invention is not limited thereto.

Moreover, the above-described embodiment and variations may be implemented in any combination.

Finally, although various embodiments of the present invention have been described, these are presented as examples and are not intended to limit the scope of the present invention. Other novel embodiments may be implemented in various forms, and various omissions, substitutions, and modification may be made within the scope of invention without departing from the spirit of the present invention. The embodiments or modifications thereof are included in the scope and spirit of the present invention, as well as within the scope of the invention and equivalents thereof recited in the claims.

## Claims

1. A travel control device, comprising:
a housing that is mounted on a vehicle;
a sensor that is mounted in the housing and emits an electromagnetic wave to detect an obstacle; and
a circuit for controlling traveling of the vehicle based on a detection result of the sensor, wherein
the sensor is positioned vertically above a region that may be the center of gravity of the vehicle.

2. The travel control device according to claim 1, wherein:
the electromagnetic wave propagates while expanding an irradiation range with the sensor as a starting point, and
the sensor is provided in a direction where the lower end of the electromagnetic wave whose irradiation range expands does not hit the ground in front of the vehicle.

3. The travel control device according to claim 1 or 2, wherein:
the housing has a box-shape including a plate-like member at a vertically upper side,
the plate-like member is provided with a hole that is in a shape of the sensor, and
the sensor is inserted into the hole and fixed, and is connected to the circuit via a wiring inside the housing.

4. The travel control device according to any one of claims 1 to 3, wherein:
the sensor has a function of detecting a position of a predetermined marker,
the marker is arranged in a vicinity of a boundary of an area in which the vehicle travels,
the circuit controls the vehicle so that the vehicle travels inside an area whose boundary is in a vicinity of a position of the marker detected by the sensor, and
the sensor is provided at a position lower than the upper end of the marker.

5. The travel control device according to any one of claims 1 to 4, wherein:
the sensor has a portion that emits the electromagnetic wave in a direction of a predetermined range along a horizontal direction, and the portion is provided at a position higher than the upper end that is located at the highest position in the vehicle and the housing.

6. The travel control device according to claim 1, wherein:
the sensor has a function of detecting a signal from a predetermined beacon,
the beacon is arranged at a boundary of an area in which the vehicle travels, and
the circuit controls the vehicle so that the vehicle travels inside an area whose boundary is a position of the beacon indicated by the signal detected by the sensor.

7. The travel control device according to claim 1, wherein:
the sensor has a function of detecting a position of the vehicle, and
the circuit controls traveling of the vehicle based on the position detected by the sensor.
